Europäisches Patentamt

European Patent Office

Office européen des brevets

(19)

(11) Veröffentlichungsnummer: **0 242 895 B1**

# EUROPÄISCHE PATENTSCHRIFT

(12)

(45) Veröffentlichungstag der Patentschrift: **19.02.92**

(51) Int. Cl.⁵: **G01N 23/201**, G01N 23/20, G01N 23/00, G01T 1/29

(21) Anmeldenummer: **87200402.3**

(22) Anmeldetag: **05.03.87**

(54) **Verfahren zur Bestimmung der räumlichen Struktur in einer Schicht eines Untersuchungsbereiches.**

(30) Priorität: **18.03.86 DE 3608965**

(43) Veröffentlichungstag der Anmeldung:
**28.10.87 Patentblatt 87/44**

(45) Bekanntmachung des Hinweises auf die
Patenterteilung:
**19.02.92 Patentblatt 92/08**

(84) Benannte Vertragsstaaten:
**DE FR GB NL**

(56) Entgegenhaltungen:
**EP-A- 0 209 952**
**DE-A- 3 406 905**
**US-A- 4 288 695**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB NL**

(72) Erfinder: **Harding, Geoffrey, Dr.**
**Franzosenkoppel 110a**
**W-2000 Hamburg 53(DE)**
Erfinder: **Kosanetzky, Josef-Marie, Dr.**
**Langenharmer Ring 120**
**W-2000 Norderstedt 1(DE)**

(74) Vertreter: **Hartmann, Heinrich, Dipl.-Ing. et al**
**Philips Patentverwaltung GmbH Wendenstrasse 35 Postfach 10 51 49**
**W-2000 Hamburg 1(DE)**

EP 0 242 895 B1

**Beschreibung**

Die Erfindung betrifft ein Verfahren zur Bestimmung der räumlichen Struktur in einer Schicht eines Untersuchungsbereiches, bei dem ein Untersuchungsbereich auf einer Vielzahl von Strahlenpfaden und aus einer Vielzahl von Richtungen von einem Primärstrahl durchsetzt wird und die aus dem Untersuchungsbereich unter verschiedenen Winkeln austretende Strahlung durch eine Detektoranordnung in verschiedenen Positionen außerhalb des Untersuchungsbereiches erfaßt wird, wonach aus den dabei gewonnenen Meßwerten für jedes Bildelement der Schicht der differentielle Streukoeffizient für verschiedene Impulsüberträge bestimmt wird, sowie eine Anordnung zur Durchführung des Verfahrens.

Ein solches Verfahren ist im wesentlichen aus der DE-OS 34 06 905 bekannt. Dabei wird ein Untersuchungsbereich unter verschiedenen Winkeln auf Gruppen von jeweils parallelen Strahlenpfaden von dem Primärstrahl durchsetzt. Die Detektoranordnung erfaßt einerseits den aus dem Untersuchungsbereich austretenden Primärstrahl sowie die Streustrahlung, die unter einem relativ kleinen Streuwinkel (bis zu 12°) in bezug auf den Primärstrahl aus dem Untersuchungsbereich austritt. Verschiedene Streuwinkel werden dabei mit verschiedenen Detektorelementen der Detektoranordnung erfaßt. Danach wird für jedes Bildelement ein Bildwert gebildet, der dem Produkt aus der Streudichte (d.h. der Zahl der Atome pro Volumeneinheit) in diesem Bildelement und aus dem differentiellen Streuquerschnitt entspricht. Dieses Produkt, das im folgenden als differentieller Streukoeffizient bezeichnet wird, ist ein - auf die Längsausdehnung eines Bildelementes und die Einheit des Raumwinkels bezogenes - Maß für den Anteil der im Primärstrahl enthaltenen Röntgen- oder Gammaquanten, der in dem Bildelement in der durch einen Streuwinkel vorgegebenen Richtung gestreut wird.

Zwischen dem Streuwinkel $\beta$ und dem Impulsübertrag (momentum transfer) X besteht die Beziehung

$$X = 2h \cdot \sin(\beta/2)/L \qquad (1)$$

Dabei ist h das Planck'sche Wirkungsquantum ($6,63 \times 10^{-34}$ Js) und L die Wellenlänge des Röntgen- bzw. Gammaquants. Wenn daher die Energie der Quanten im Primärstrahl vorgegeben ist, kann jedem Streuwinkel ein Impulsübertrag X eindeutig zugeordnet werden. Bei dem bekannten Verfahren wird somit für jedes Bildelement der Schicht der differentielle Streukoeffizient für verschiedene Impulsüberträge bestimmt.

Aufgrund der kleinen Streuwinkel wird mit dem bekannten Verfahren im wesentlichen nur die sogenannte Rayleigh-Streustrahlung erfaßt. Die Rayleigh-Streuung ist bekanntlich ein Prozeß, bei dem Gammaquanten durch atomar gebundene Elektronen gestreut werden, ohne daß sich ihre Energie ändert. Für die niedrigen Werte des Streuwinkels bzw. des Impulsübertrages, die bei dem bekannten Verfahren ausgenutzt werden, hängt der Verlauf des differentiellen Streukoeffizienten bzw. des differentiellen Streuquerschnittes wesentlich von der Struktur der Moleküle ab, in der sich das Atom befindet, an dessen Elektron die Rayleigh-Streuung erfolgt.

Demgegenüber liegt der vorliegenden Erfindung die Aufgabe zugrunde, ein Verfahren anzugeben, das eine quantitative Aussage über den Gehalt der Schicht (bzw. einzelner Bildelemente in der Schicht) an vorbestimmten chemischen Elementen - unabhängig von deren struktureller Zuordnung - erlaubt.

Ausgehend von einem Verfahren der eingangs genannten Art wird diese Aufgabe dadurch gelöst, daß die Compton- und die Rayleigh-Streustrahlung an den verschiedenen Punkten getrennt gemessen wird, daß aus den Meßwerten für die Bildelemente der Schicht der differentielle Streukoeffizient für Compton- und Rayleigh-Streustrahlung getrennt bestimmt werden und daß für die einzelnen Bildelemente der Anteil der verschiedenen chemischen Elemente so bestimmt wird, daß die Überlagerung der mit diesen Anteilen gewichteten differentiellen Streuquerschnitte dieser Elemente als Funktion des Impulsübertrages zumindest annähernd proportional zu den ermittelten differentiellen Streukoeffizienten für Compton- und Rayleigh-Streuung als Funktion des Impulsübertrages verläuft.

Die Erfindung basiert auf der Erkenntnis, daß in einem bestimmten Bereich des Impulsübertrages für verschiedene chemische Elemente der differentielle Streuquerschnitt sowohl für Rayleigh- als auch für Compton-Streustrahlung als Funktion des Impulsübertrages einen Verlauf hat, der für das betreffende chemische Element charakteristisch ist. Anhand dieses Verlaufs könnte also bestimmt werden, welches chemische Element sich jeweils in der Schicht befindet.

In der Regel befinden sich in einem Bildelement mehrere chemische Elemente. Wenn diese bekannt sind, kann (durch geeignete Variation der Gewichtungsfaktoren) eine gewichtete Summe der (bekannten) differentiellen Streuquerschnitte der einzelnen Elemente so gebildet werden, daß der Verlauf dieser Summe als Funktion des Impulsübertrages dem durch die Messung ermittelten Verlauf des differentiellen Streuquerschnittes als Funktion des Impulsübertrages zumindest näherungsweise entspricht. Die Gewichtungsfaktoren der Summe, die dem gemessenen Verlauf am besten entspricht, stellen den Anteil der betreffenden chemischen Elemente in dem Bildelement dar.

Vorzugsweise wird die Streustrahlung bei dem erfindungsgemäßen Verfahren für Impulsüberträge im Bereich $0,5 \leq xLo/h \leq 6$ bestimmt, wobei Lo gleich $10^{-10}$ m (= 1 Angström) ist. Wenn die Energie der Röntgenquanten im Primärstrahl beispielsweise bei etwa 60 keV liegt, dann ist diese Bedingung für Streuwinkel im Bereich zwischen etwa 6˚ und 80˚ erfüllt.

Bei kleineren Streuwinkeln bzw. Impulsüberträgen werden die Messungen durch die Struktur der molekularen Verbindung beeinflußt, in der sich die am Streuprozeß beteiligten Atome befinden. Die obere Grenze des Streuwinkels liegt aus geometrischen Gründen bei etwa 90˚.

Zur getrennten Erfassung von Compton- und Rayleigh-Streustrahlung muß die Tatsache ausgenutzt werden, daß bei der Comptonstreuung die Energie des gestreuten Röntgenquants verringert wird, während sie bei der Rayleigh-Streustrahlung erhalten bleibt. Die Detektoranordnung muß also ein Energieauflösungsvermögen aufweisen. Jedoch ist dieses z.B. bei Germanium-Detektoren auf etwa 300 eV begrenzt (bei 60 keV). Wenn aber die Quantenergie im Primärstrahl beispielsweise 57 keV beträgt, dann erfahren bei der Compton-Streuung nur diejenigen Quanten einen Energieverlust von 300 eV oder mehr, die unter einem Streuwinkel von 18˚ (oder mehr) austreten. Bei kleineren Streuwinkeln könnten derartige Detektoren die Compton-Streustrahlung und die Rayleigh-Streustrahlung nicht getrennt erfassen.

Eine Weiterbildung der Erfindung sieht daher vor, daß für jede Richtung und jeden Strahlenpfad eine erste Messung der Streustrahlung durchgeführt wird, bei der die Streustrahlung direkt auf die Detektoranordnung trifft, und eine zweite Messung, bei der zwischen dem Untersuchungsbereich und der Detektoranordnung ein Filter eingesetzt wird, dessen Absorptionsbandkante bei einer Wellenlänge liegt, die kürzer ist als die Wellenlänge der erzeugten Compton-Streustrahlung und länger als die Wellenlänge der Rayleigh-Streustrahlung.

Entspricht die Wellenlänge, bei der die Absorptionsbandkante des Filters liegt, einer Energie, die nur geringfügig, z.B. 40 eV, unterhalb der Quantenenergie im Primärstrahl liegt, dann wird die Rayleigh-Streustrahlung bei der zweiten Messung durch das Filter mehr oder weniger unterdrückt, so daß aus dem Vergleich der ersten und der zweiten Messung die Compton- und die Rayleigh-Streustrahlung getrennt bestimmt werden können.

Eine Anordnung zur Durchführung des Verfahrens mit einer Strahlenquelle zur Erzeugung von Gamma- oder Röntgenstrahlung, einer Ausblendvorrichtung zur Erzeugung eines Primärstrahls mit geringem Querschnitt, der einen Untersuchungsbereich durchsetzt, eine Detektoranordnung zur Erfassung des Primärstrahls jenseits des Untersuchungsbereichs und der in dem vom Primärstrahl durchsetzten Bereich erzeugten Streustrahlung, Antriebsmitteln zur Erzeugung von translatorischen und rotatorischen Bewegungen zwischen dem Untersuchungsbereich einerseits und der Strahlenquelle und der Detektoranordnung andererseits und mit einer Recheneinrichtung zur Bestimmung der differentiellen Streukoeffizieten in den Bildelementen der vom Primärstrahl durchsetzten Schicht des Untersuchungsbereichs, ist dadurch gekennzeichnet, daß die Detektoranordnung so ausgebildet ist, daß bei der Detektion von Gamma- oder Röntgenquanten Impulse mit von der Quantenenergie abhängige Amplitude erzeugt werden, daß die Weiterverarbeitung der Impulse in Abhängigkeit von ihrer Amplitude derart erfolgt, daß die Compton- und Rayleigh-Streustrahlung getrennt erfaßbar sind, daß eine Speicheranordnung vorgesehen ist, in der von dem im Untersuchungsbereich vorkommenden chemischen Elementen die Streuquerschnitte für Compton- und Rayleigh-Streustrahlung für verschiedene Werte des Impulsübertrages gespeichert sind, und daß die Recheneinheit so programmiert ist, daß aus den Meßwerten und den in der Speicheranordnung enthaltenen Werten der Anteil der in den einzelnen Bildelementen enthaltenen chemischen Elemente bestimmt wird.

Wenn Compton- und Rayleigh-Streustrahlung getrennt erfaßt werden soll, muß eine Strahlenquelle verwendet werden, die eine möglichst monochromatische Röntgen- oder Gammastrahlung liefert. Bei einem breitbandigen Röntgen- oder Gammastrahlenspektrum wäre es nämlich nicht möglich, aus der Energie eines gestreuten Quantes auf den Streuprozeß (Rayleigh- oder Compton-Streuung) zu schließen und die beiden Streustrahlenanteile getrennt zu bestimmen. Nun ist es zwar bekannt, daß Isotope eine exakt monochromatische Röntgenstrahlung liefern, doch ist deren Intensität sehr gering. Die Durchführung des erfindungsgemäßen Verfahrens würde daher so lange dauern, daß damit Untersuchungen am lebenden menschlichen oder tierischen Körper kaum durchführbar wären. Eine Weiterbildung der Erfindung sieht daher vor, daß als Strahlenquelle ein Röntgenstrahler mit einer Tantalanode dient und daß in dessen Strahlung ein Filter zum Unterdrücken der kürzerwelligen Strahlung vorgesehen ist, wobei in weiterer Ausgestaltung der Erfindung das Filter aus Thulium besteht.

Ein Röntgenstrahler besitzt bekanntlich ein Bremsstrahlungsspektrum, dessen maximale Energie durch die an den Röntgenstrahler angelegte Hochspannung bestimmt ist; beträgt die Hochspannung beispielsweise 120 kV, dann ist die maximale Energie der erzeugten Röntgenquanten 120 keV. Außer der Bremsstrahlung emittiert der Röntgenstrahler aber noch eine charakteristische Strahlung, die ein Linienspektrum hat.

Besonders ausgeprägt ist die Intensität der sogenannten K$\alpha_1$-Linie.Sie beträgt etwa 10 % der Gesamtintensität. Die Energie der K$\alpha_1$-Linie beträgt bei einem Röntgenstrahler mit einer Tantalanode 57,524 keV. Die Absorptionsbandkante des Thuliumfilters liegt bei etwa 59,4 keV. Dadurch wird also der höherenergetische Teil des Bremsstrahlungsspektrums weitgehend unterdrückt, während der niederenergetische Teil und insbesondere die K$\alpha_1$-Linie durch das Filter weitgehend unbeeinflußt bleiben.

In noch weiterer Ausgestaltung der Erfindung ist bei einem derartigen Röntgenstrahler vorgesehen, daß ein Erbiumfilter vorgesehen ist, das zwischen den Untersuchungsbereich und die Detektoranordnung einschiebbar ist. Erbium hat eine Absorptionsbandkante bei einer Wellenlänge, die einer Quantenenergie von 57,483 keV entspricht. Ein solches Filter unterdrückt also weitgehend die Rayleigh-Streustrahlung, die durch die K$\alpha$-Linie eines Röntgenstrahlers mit Tantalanode hervorgerufen wird, während die Compton-Streustrahlung dadurch nur geringfügig beeinflußt wird. Der Einsatz eines solchen Filters gestattet also mit zwei Messungen die getrennte Erfassung von Compton- und Rayleigh-Streustrahlung, so daß an das Energieauflösungsvermögen der Detektoranordnung keine extremen Anforderungen gestellt werden müssen. Anstelle von Halbleiterdetektorelementen, die meist eine Kühlung erfordern und teuer sind, können daher auch andere Detektorelemente, z.B. Szintillationsdetektoren mit Natriumjodidkristall, in der Detektoranordnung enthalten sein.

Die Erfindung wird nachstehend anhand der Zeichnung näher erläutert. Es zeigen:

Fig. 1       eine Anordnung zur Durchführung des Verfahrens,

Fig. 1b       eine Ausführungsform einer dafür geeigneten Strahlenquelle,

Fig. 2a       bis c das Spektrum der in Fig. 1 benutzten Röntgenstrahlenquelle vor und hinter dem Thuliumfilter sowie den Verlauf der Dämpfung durch das Erbiumfilter,

Fig. 3       schematisch ein Flußdiagramm der Recheneinrichtung zur Bestimmung der Anteile der verschiedenen chemischen Elemente, und

Fig. 4       einen Teil eines solchen Flußdiagramms,

Fig. 5a       bis c verschiedene Diagramme zur Erläuterung der in dem Programmteil gemäß Fig. 4 durchgeführten Berechnungen.

In Fig. 1a ist mit 1 eine Strahlenquelle in Form eines Röntgenstrahlers bezeichnet, aus dessen Strahlenbündel mittels einer Blendenanordnung 2 ein Primärstrahl 3 mit geringem Querschnitt (pencil beam) ausgeblendet wird. Der Primärstrahl 3 durchsetzt einen kreisförmigen Untersuchungsbereich 4, der das zu untersuchende Objekt 5, z.B. einen menschlichen Körper, umschließt. Die aus dem Untersuchungsbereich austretende Strahlung wird von einer Detektoranordnung 6 erfaßt.

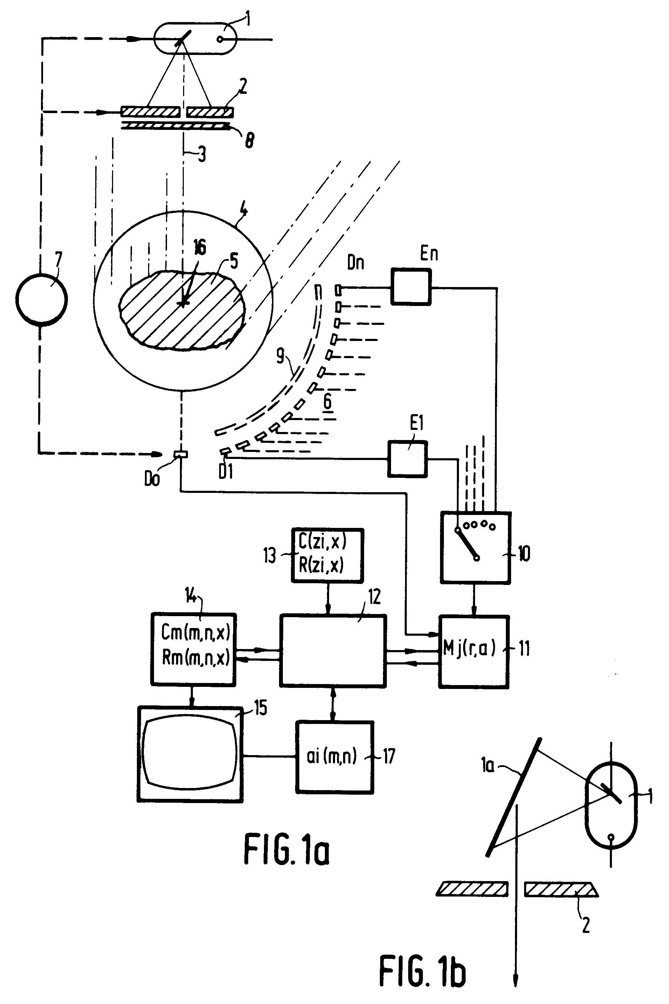

Es ist eine Antriebseinrichtung 7 vorgesehen, die eine translatorische bzw. rotatorische Relativbewegung zwischen dem Untersuchungsbereich 4 bzw. dem Körper 5 einerseits und dem Röntgenstrahler 1, der Ausblendvorrichtung 2 und der Detektoranordnung 6 andererseits erzeugt. Dadurch wird der Untersuchungsbereich zunächst auf einer Vielzahl von zum Primärstrahl 3 parallelen Strahlenpfaden und anschließend auf dazu unter verschiedenen Winkel verlaufenden, jeweils untereinander parallelen Strahlenpfaden durchsetzt. Insoweit als bisher in Verbindung mit Fig. 1 beschrieben entspricht die Anordnung bekannten Computertomographen der ersten Generation.

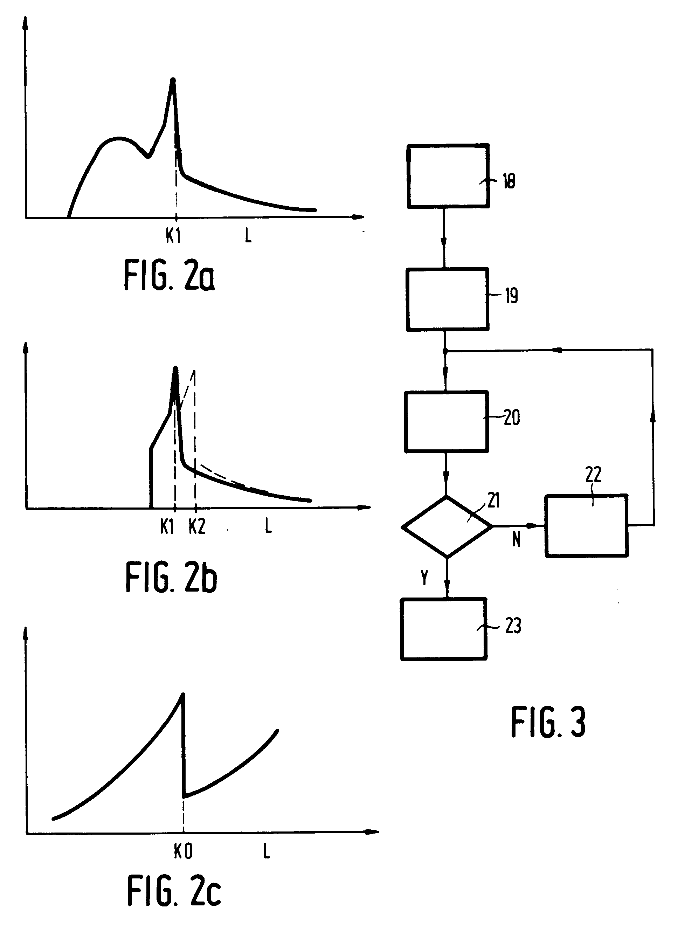

Der Röntgenstrahler 1 enthält eine Anode, die zumindest von dem in dem Röntgenstrahler erzeugten Elektronen getroffenen Bereich aus Tantal besteht. Er wird an einer Hochspannung betrieben, z.B. 100 oder 120 kV, die wesentlich höher ist als die charakteristische Energie von Tantal (57,524 keV). Das Spektrum der von der Anode emittierten Röntgenstrahlung hat daher den in Fig. 2a als Funktion der Wellenlänge L angedeuteten Verlauf, wobei die Wellenlänge der charakteristischen Strahlung mit k1 bezeichnet ist.

Zwischen dem Röntgenstrahler 1 und dem Untersuchungsbereich 4 befindet sich ein Filter 8 aus Thulium, dessen Absorptionsbandkante bei etwa 59,335 keV liegt. Dieses Filter unterdrückt weitgehend den Teil des Spektrums, dessen Wellenlänge L kleiner ist als der Energie von 59,5 keV entspricht und läßt den anderen Teil mit einer größeren Wellenlänge praktisch ungehindert durch. Das Spektrum des den Untersuchungsbereich 4 durchsetzenden Primärstrahls 3 hat daher den in Fig. 2b mit ausgezogenen Linien - idealisiert - dargestellten Verlauf.

In der Praxis läßt sich die Bremsstrahlung nicht so stark unterdrücken wie in Fig. 1b dargestellt. Eine Strahlenquelle, bei der das Bremsstrahlenspektrum noch weiter unterdrückt ist, zeigt Fig. 1b. Dabei wird die Fluoreszenzstrahlung ausgenutzt, die eine Tantalfolie 1a emittiert, wenn sie von der Röntgenstrahlung eines an 100-120 kV betriebenen Röntgenstrahlers getroffen wird. Die Fluoreszenzstrahlung ist praktisch ein reines Linienspektrum, dessen Intensität allerdings geringer ist als das Linienspektrum eines Tantal-Röntgenstrahlers nach Fig. 1a. Das Thuliumfilter 8 ist hierbei auch noch erforderlich, um die k$\beta$-Linie (65 keV) zu unterdrücken.

Eine rein monochromatische Strahlung ergibt sich bei Verwendung einer Radionuklid-Strahlenquelle, vorzugsweise Americium 241. Die Energie dieser Strahlung liegt bei 59,537 keV. Das Filter 8 wäre dabei überflüssig.

Die Detektoranordnung 6 besteht aus einer Anzahl von Detektoreleementen Do, D1...Dn. Das Detektorelement Do erfaßt den Primärstrahl 3 jenseits des Untersuchungsbereiches. Der von ihm gelieferte Meßwert ist daher ein Maß für die Schwächung des Primärstrahls. Die Detektoren D1...Dn sind so angeordnet, daß sie von dem Primärstrahl 3 nicht getroffen werden, sondern nur von der durch den Primärstrahl 3 im Untersuchungsbereich 4 erzeugten Streustrahlung. Dabei ist die Zahl der Detektorelemente und dere Anordnung so getroffen, daß die Streustrahlung aus im wesentlichen jedem Punkt längs des Primärstrahls 3 für Streuwinkel zwischen etwa 6° und 80° von soviel Detektorelementen erfaßt wird wie verschiedene chemische Elemente in dem Körper 5 sind. Bei der Untersuchung eines menschlichen Körpers müssen also mindestens sechs Detektorelemente vorhanden sein - weil der menschliche Körper bis auf einen kleinen Rest aus Sauerstoff, Wasserstoff, Kohlenstoff, Stickstoff, Phosphor und Calcium besteht - , die die von einem Punkt im Untersuchungsbereich auf dem Primärstrahl 3 erzeugte Streustrahlung in einem Streuwinkelbereich zwischen 6° und 80° erfassen.

Da diejenigen Röntgenquanten im Primärstrahl 3, die durch einen Compton-Streuprozeß gestreut werden, Energie verlieren, verschiebt sich das Spektrum dieser Art von Streustrahlung zu längeren Wellenlängen hin, wie in Fig. 2b gestrichelt angedeutet. Die Wellenlänge der K -Linie verschiebt sich dabei von k1 nach k2. Das Ausmaß der Verschiebung hängt von dem Streuwinkel ab. Bei einem Streuwinkel von 12° entspricht die Wellenlängenänderung einem Energieunterschied von etwa 140 eV. Bei einem Streuwinkel von 180° entspricht die Verschiebung einer Energiedifferenz von 4.900 eV.

Zwischen dem Untersuchungsbereich 4 und der Detektoranordnung 6 ist ein aus Erbium bestehendes Filter 9 so angeordnet, daß es zwei Positionen einnehmen kann: Eine erste Position, in der die Streustrahlung vom Filter 9 ungehindert zu den Detektorelementen D1...Dn gelangen kann und eine zweite Position, in der die Strahlung nur durch das Filter 9 zu den Detektorelementen gelangt.

Der Verlauf der Dämpfung des Erbiumfilters als Funktion der Wellenlänge L ist in Fig. 2c schematisch dargestellt. Man erkennt, daß die Dämpfung des Filters mit wachsender Wellenlänge zunächst monoton zunimmt, um bei einer Wellenlänge ko sprungartig auf einen niedrigeren Wert abzunehmen und danach wieder anzusteigen. Der Sprung des Dämpfungsfaktors bei der Wellenlänge ko stellt eine Absorptionsbandkante des Filters 9 dar. Die K-Absorptionsbandkante hat eine Wellenlänge, die einer Quantenenergie von 57,483 keV entspricht. Sie liegt also nur 40 keV unterhalb der Energie der für Tantal charakteristischen Röntgenstrahlung (k1). Das Filter 9 hat also für die Rayleigh-Streustrahlung (ausgezogenen Linien in Fig. 2b) und die Compton-Streustrahlung (gestrichelten Linien) Dämpfungswerte, die sich wesentlich voneinander unterscheiden.

Führt man daher zwei Messungen durch - einmal mit eingeschobenen Filter und einmal ohne das Filter - , so gehen der Rayleigh- und der Compton-Streustrahlenanteil mit unterschiedlichen Gewichtungen in die dabei erhaltenen Meßwerte ein. Daraus lassen sich der Anteil der Compton-Streustrahlung und der Rayleigh-Streustrahlung getrennt bestimmen, wenn der Verlauf der Dämpfung des Erbiumfilters 9 als Funktion der Dämpfung bekannt ist (vgl. Fig. 2c). Bei Verwendung einer Americium 241-Strahlenquelle müßte das Filter 9 aus Thulium bestehen, damit die Rayleigh-Streustrahlung unterdrückt werden kann.

Jedem der Detektorelemente D1...Dn ist eine Verarbeitungseinheit E1...En nachgeschaltet, wobei in Fig. 1 nur die Einheiten E1 und En dargestellt sind. Jedes Detektorelement D1...Dn erzeugt bei der Detektion eines gestreuten Röntgenquantes einen Impuls, dessen Amplitude der Energie des Röntgenquants proportional ist. Diese Impulse werden in den Einheiten E1...En verstärkt und einer Impulshöhenanalyse unterzogen. Nur solche Impulse, die eine bestimmte Impulshöhe überschreiten, die also von Röntgenquanten stammen, deren Energie kleiner ist als der Wellenlänge k1 entspricht und größer als der Wellenlänge k2 entspricht, werden in einem in jeder Einheit enthaltenen Zähler gezählt. Der Zählerstand ist also ein Maß für die Intensität der Streustrahlung. Diese Information wird über einen Multiplexer 10 einem Speicher 11 zugeführt. Vorzugsweise werden zuvor Einflüsse, die nicht oder nicht direkt vom Objekt abhängig sind (vielfach gestreute Strahlung, Detektorempfindlichkeit, Ausrichtung der Detektorelemente relativ zum Primärstrahl, usw.) durch Multiplikation der Meßwerte mit Korrekturfaktoren eliminiert. Die Korrekturfaktoren werden aus Kalibrationsmessungen an in ihrem Streuverhalten bekannten Objekten (z.B. Wasser) gewonnen. Nach Durchführung des gesamten Meßverfahrens enthält dieser also für jeden Strahlenpfad, jede Richtung und jeden Detektor zwei Meßwerte für die Compton- und die Rayleigh-Streustrahlung bzw. zwei Meßwerte, aus denen die beiden Streustrahlenanteile entnehmbar sind. Eine Recheneinrichtung 12 ermittelt aus den gespeicherten Werten für die einzelnen Bildelemente des Untersuchungsbereichs jeweils den differentiellen Streukoeffizienten als Funktion des Impulsübertrages und daraus den Anteil der chemischen Elemente in den einzelnen Bildelementen.

Fig. 3 erläutert die Bestimmung der Anteile der verschiedenen chemischen Elemente anhand eines Flußdiagramms. Im Block 18 wird aus den vom Detektorelement Do erfaßten Meßwerte die räumliche Verteilung der Schwächung in der vom Primärstrahl 3 durchsetzten Schicht des Untersuchungsbereiches 4 bestimmt. Dies erfolgt in der aus der Computertomographie bekannten Weise. Es versteht sich von selbst, daß zuvor die Ausgangssignale des Detektorelementes Do verstärkt und in einem Digital-Analog-Wandler in digitale Datenworte umgesetzt werden müssen, bevor sie von der Recheneinrichtung 12 verarbeitet werden können. Die hierfür erforderlichen Teile sind in Fig. 1 der Übersichtlichkeit halber nicht dargestellt.

Der Block 19 beinhaltet das Laden der Meßwerte für die Compton-Streuung. Im Block 20 werden aus diesen Meßwerten für die Bildelemente in der Schicht des Untersuchungsbereiches 4 die differentiellen Streukoeffizienten für Compton-Streuung als Funktion des Impulsübertrages bestimmt.

Bei der Verzweigung 21 erfolgt eine Abfrage, ob bereits die Meßwerte für die Rayleigh-Streustrahlung verarbeitet sind. Da dies zunächst nicht der Fall ist, verzweigt das Programm zum Block 22, in dem diese Meßwerte geladen werden. Danach wird aus diesen Meßwerten im Block 20 für jedes Bildelement der Schicht iterativ der differentielle Streukoeffizient für Rayleigh-Streustrahlung bestimmt. Nach der erneuten Abfrage verzweigt das Programm zum Block 23, in dem aus den differentiellen Streuquerschnitten für die Rayleigh-Streustrahlung und die Compton-Streustrahlung die Anteile der verschiedenen chemischen Elemente an der in den einzelnen Bildelementen enthaltenen Materie bestimmt werden.

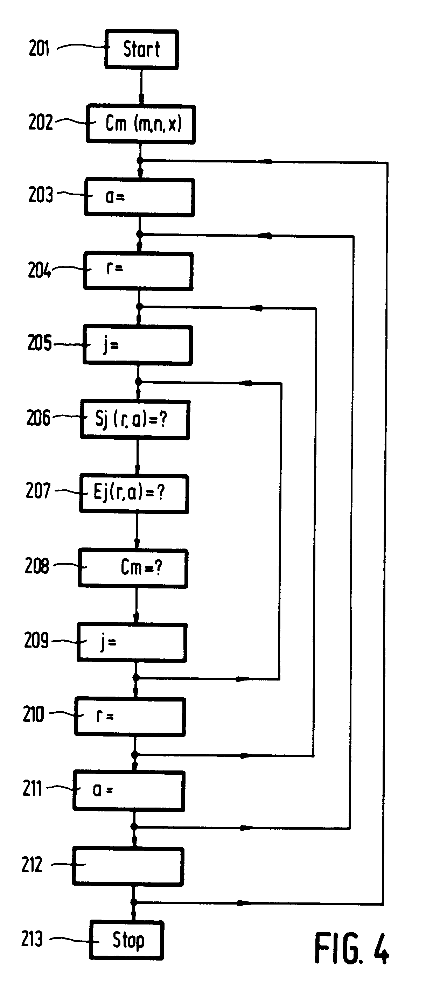

Fig. 4 zeigt ein Flußdiagramm des Blocks 20 zur Bestimmung der differentiellen Streukoeffizienten Cm für Compton-streustrahlung für alle Bildelemente der Schicht und für verschiedene Impulsüberträge. Die Berechnung der differentiellen Streukoeffizienten Rm für Rayleigh-Streuung erfolgt auf analoge Weise.

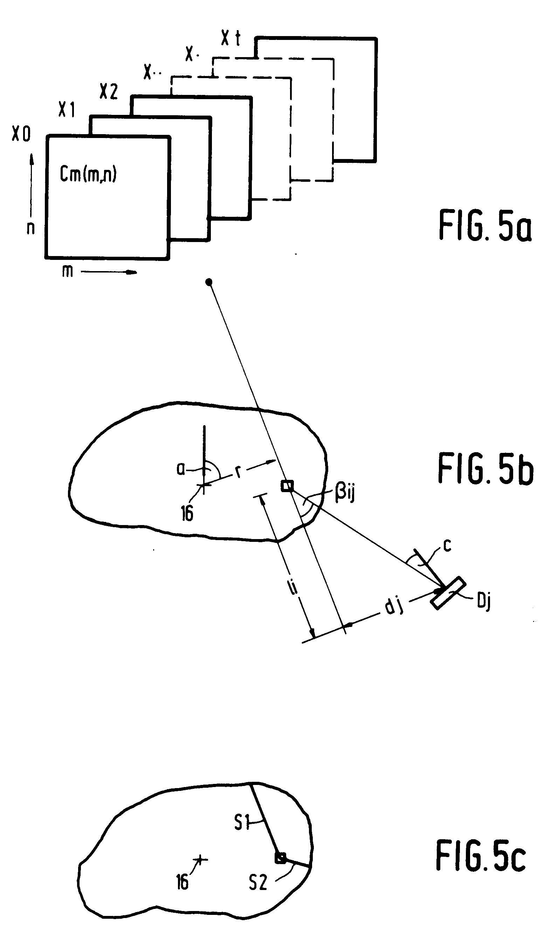

Nach dem Start (Schritt 201) wird der differentielle Streukoeffizient Cm für alle Bildelemente m,n und für verschiedene Impulsüberträge vorgegeben. Gemäß Fig. 5a erhält man dann für die Impulsüberträge Xo, X1, X2...Xt je ein Bild, das für den betreffenden Impulsübertrag die räumliche Verteilung des differentiellen Streukoeffizienten zeigt - vgl. Fig. 5a. Anders ausgedrückt werden für jedes Bildelement - das durch die Spalte m und die Zeile n, in der es sich jeweils befindet - der differentielle Streukoeffizient Cm als Funktion des Impulsübertrages X festgelegt. Die Zahl der verschiedenen Impulsüberträge, für die diese Festlegung erfolgt, muß mindestens so groß sein, wie die Zahl der im Untersuchungsbereich im wesentlichen enthaltenen chemischen Elemente und nicht größer als die Zahl der zur Erfassung der Streustrahlung vorgesehenen Detektorelemente D1...Dn.

Die Vorgabe der differentiellen Streuquerschnitte ist willkürlich. Dabei kann beispielsweise davon ausgegangen werden, daß sich überall im Untersuchungsbereich 4 Wasser befindet, so daß sich für jeden Impulsübertrag bei allen Bildelementen der gleiche differentielle Streukoeffizient ergibt, der als Funktion des Impulsübertrages den gleichen Verlauf hat wie der differentielle Streuquerschnitt von Wasser. Diese Anfangsverteilung braucht nicht bei jeder Untersuchung neu vorgegeben zu werden. Sie kann in einem Speicher enthalten sein und braucht dann lediglich aus dem Speicher geladen zu werden.

Im nächsten Schritt 203 wird der Winkel a, der die Richtung des Strahlenpfades kennzeichnet, vorgegeben und im Schritt 204 der Abstand r des Strahlenpfades vom Mittelpunkt 16 (vgl. Fig. 5b). Im nächsten Programmschritt 205 wird aus den Detektorelementen D1...Dn ein Detektorelement Dj ausgewählt.

Im Programmschritt 206 erfolgt eine Berechnung der Streustrahlung, die der Detektor Dj messen würde, wenn der Primärstrahl den Untersuchungsbereich längs des durch die Parameter r und a definierten Strahlenpfades durchsetzt hätte und wenn die angenommene Verteilung der differentiellen Streuquerschnitte der tatsächlichen Verteilung entsprechen würde. Dazu wird für das i-te Bildelement auf dem Strahlenpfad der Streuwinkel $\beta_{ij}$ berechnet, unter dem die in diesem Bildelement erzeugte Streustrahlung auf den Detektor Dj trifft (vgl. Fig.5b). Der Winkel $\beta_{ij}$ berechnet sich nach der Gleichung:

$$\beta_{ij} = \text{arc tan}(d_j/l_i) \qquad (2)$$

Dabei ist $d_j$ der Abstand des Detektorelementes Dj von dem Strahlenpfad und $l_i$ der Abstand des Fußpunktes des Lotes vom Detektor auf den Strahlenpfad von dem Bildelement (vgl. Fig. 5b). Wenn der Streuwinkel $\beta_{ij}$ bekannt ist, kann der Impulsübertrag berechnet werden nach der Gleichung:

$$X_{ij} = 2h \cdot \sin(\beta_{ij}/2)/L \qquad (3)$$

Die Wellenlänge L entspricht dabei für Rayleigh-Streuung der Wellenlänge der Strahlung im Primärstrahl, während diese Wellenlänge für Compton-Streustrahlung aus der genannten Wellenlänge und dem Streuwinkel $\beta_{ij}$ nach der bekannten Beziehung für die Wellenlängenänderung bei Compton-Streustrahlung bestimmt werden muß. Schließlich wird der Raumwinkel Doij bestimmt, den der Detektor Dj von der im i-ten Bildelement erzeugten Streustrahlung erfaßt. Dieser berechnet sich nach der Gleichung:

$$Do_{ij} = F \cdot \cos c/(d_j^2 + l_i^2) \qquad (4)$$

6

Dabei ist F die Meßfläche des Detektorelementes Dj und c der Winkel, den das Lot auf die Meßfläche mit der Richtung der Streustrahlen einschließt.

Weiterhin wird die Schwächung Tij bestimmt, die der Primärstrahl auf seinem Weg S1 zum i-ten Bildelement (vgl. Fig. 5c) und auf seinem Weg S2 von diesem Bildelement zum Detektorelement Dj erfährt. Da die Wellenlänge der Strahlung auf den Wegen S1 und S2 bekannt ist und da die Schwächung längs der Wege S1 und S2 aus dem zuvor (Block 18) berechneten Computertomogramm bekannt ist, kann Tij exakt bestimmt werden.

Die Berechnung der Schwächung und die Berechnungen nach den Gleichung (2) bis (4) werden für alle M Bildelemente wiederholt, die sich innerhalb des Untersuchungsbereiches 4 auf dem durch die Parameter a und r gekennzeichneten Strahlenpfad befinden. Danach wird die von dem Strahlenpfad auf das Detektorelement Dj fallende Intensität der Streustrahlung berechnet nach der Gleichung:

$$Sj(r,a) = d \cdot \sum_{i=1}^{M} Cm(i,Xij) \bullet Doij \ Tij \qquad (5)$$

Dabei ist d eine Konstante und Cm(i,Xij) der differentielle Streuquerschnitt für den Impulsübertrag Xij und das i-te Element auf dem Strahlenpfad. Da die Lage des Strahlenpfades durch r und a vorgegeben ist, läßt sich jedem Element i auf dem Strahlenpfad ein Bildelement mit den Parametern m und n zuordnen, so daß der Wert Cm(i,Xij) aus den vorgegebenen Daten Cm(m,n,X) bestimmt werden kann. Im allgemeinen hat das i-te Element auf dem Strahlenpfad nicht exakt die gleiche räumliche Lage wie eines der durch m und n gekennzeichneten Bildelemente. Ebensowenig ist in der Regel Xij mit einem der Impulsüberträge Xo, X1, X2...Xt identisch. In diesen Fällen muß der Wert Cm(i,xij) durch Interpolation zwischen benachbarten Bildelementen bzw. benachbarten Impulsüberträgen bestimmt werden.

Der so ermittelte Wert Sj(r,a) müßte mit dem vom Detektor Dj gemessenen Wert Mj(r,a) identisch sein - wenn die vorhandene Verteilung Cm(m,n,X) mit der tatsächlichen übereinstimmen würde. In der Regel ist dies jedoch nicht der Fall, so daß ein Korrekturwert Ej(r,a) nach der Gleichung:

Ej(r,a) = Sj(r,a) - Mj(r,a)      (6)

berechnet werden kann (Schritt 207). Der berechnete Korrekturwert Ej(r,a) ist ein Maß für die Abweichung der tatsächlichen Streukoeffizienten für die verschiedenen Bildelemente und die verschiedenen Impulsüberträge von den errechneten Werten und kann daher zur Korrektur der gespeicherten differentiellen Streukoeffizienten benutzt werden.

Bei dieser Korrektur (Schritt 208) werden all die differentiellen Streukoeffizienten, die bei der Berechnung von Sj(r,a) gemäß Gleichung (5) herangezogen wurden, korrigiert, und zwar mit dem gleichen Gewicht, mit dem sie in Gleichung (5) eingegangen sind. Die Korrektur für diese Werte des differentiellen Streukoeffizienten erfolgt, in dem zu dem bisherigen Wert ein bestimmter Anteil b des Korrekturwertes Ej(r,a) addiert wird, so daß sich die Gleichung:

Cm: = Cm + b Ej(r,a)      (7)

ergibt. Nach dem Schritt 208 ist also ein Teil der Werte Cm(m,n,X) entsprechend dem vom Detektorelement Dj erfaßten Meßwert Mj(r,a) korrigiert.

Danach wird (Schritt 209) ein anderes Detektorelement gewählt und für dieses Detektorelement werden die Schritte 206 bis 208 erneut durchgeführt, bis für den Strahlenpfad r,a die Meßwerte aller Detektorelemente D1...Dn entsprechend den gemessenen Streuintensitäten M1(r,a)...Mn(r,a) korrigiert sind.

Anschließend wird ein neuer Strahlenpfad bestimmt, in dem der Wert r, d.h. der Abstand des Strahlenpfades vom Mittelpunkt 16, des Untersuchungsbereichs 4 variiert wird (Schritt 210), so daß ein zum bisherigen Strahlenpfad benachbarter und paralleler Strahlenpfad vorgegeben wird. Für diesen Strahlenpfad werden die Schritte 205 bis 209 wiederholt, wonach der nächste Strahlenpfad vorgegeben wird usw., bis die Korrektur für alle den Untersuchungsbereich 4 in der durch a bestimmten Richtung durchsetzenden Strahlenpfade erfolgt ist.

Danach wird eine andere Richtung a der Strahlenpfade vorgegeben (Schritt 211) und die Schritte 204 bis 211 werden wiederholt, bis alle Winkelstellungen, unter denen der Primärstrahl bei der Messung den Untersuchungsbereich durchsetzt hat, verarbeitet sind. Auf diese erste Iteration können dann noch (Schritt 212) weitere Iterationen erfolgen, wobei die Schritte 203 bis 211 mehrmals durchlaufen werden. Dabei kann eine feste Zahl von Iterationen vorgesehen sein. Es ist jedoch auch möglich, die Iteration dann abzubrechen, wenn die Korrekturen im Schritt 207 stets einen bestimmten Schwellwert unterschreiten. Danach liegt eine korrigierte Verteilung Cm(m,n,x) vor, die der tatsächlichen Verteilung in guter Näherung entspricht. Aus diesen Verteilungen kann bestimmt werden, welcher Gehalt an den verschiedenen chemischen Elementen in einzelnen Bildelementen vorhanden ist.

Die Verteilungen Cm(m,n,X) werden in einem Speicher 14 gespeichert und können (neben dem Computertomogramm) auf einem Wiedergabemonitor 15 dargestellt werden (Fig. 1). Für ein einzelnes Bildelement ergibt sich als Funktion des Impulsübertrages X1, X2...Xt somit eine Folge von Werten Rm(X) für die Rayleigh-Streustrahlung und Cm(X) für die Compton-Streustrahlung. Da in diesem Bereich des Impulsübertrages des differentielle Streuquerschnitt von den in dem Bildelement enthaltenen chemischen Elementen abhängt, kann aus dem Verlauf der Werte Rm(X) bzw. Cm(X) der Anteil dieser chemischen Elemente an der Materie in dem Bildelement bestimmt werden.

Dies sei wie folgt erläutert: Der differentielle Streuquerschnitt für ein einzelnes Atom hängt einerseits vom Impulsübertrag und andererseits von der Ordnungszahl Z des Atoms ab. Der differentielle Streuquerschnitt ds/do für Compton-Streustrahlung kann daher aufgespalten werden in einen Faktor C(Z) und ein Faktor Q(X), so daß die Beziehung gilt:

$$ds/do(Z,X) = C(Z,X) \cdot Q(X) \qquad (8)$$

Q(X) ist dabei der differentielle Streuquerschnitt, der nach der bekannten Klein-Nishina-Formel (vgl. z.B. Enzyklopädie Naturwissenschaft und Tecknik, Zweiburgen-Verlag, Weinheim, Seite 734, Gleichung (5)) berechnet ist und der ausschließlich vom Impulsübertrag aber nicht von Z bzw. von der Art des Atoms abhängt. C(Z) ist die sogenannte Streufunktion, die für die verschiedenen chemischen Elemente als Funktion des Impulsübertrages bereits berechnet bzw. gemessen worden ist. Diese bekannten Werte C(z) sind u.a. in den Standardtabellen von Hubbell, Veigele, Briggs, Brown, Cromer und Howerton, J.Phys.Chem.Ref. Data 4, Seiten 471 bis 538, 1975 tabelliert; in dieser Veröffentlichung ist C(Z,X) als S(q,Z) bezeichnet.

Wegen der Unabhängigkeit von Q(X) von der Art des Atoms bzw. von dem jeweiligen chemischen Element kann der differentielle Streukoeffizient Cm(X) nach folgender Gleichung bestimmt werden:

$$Cm(X) = Q(X) \sum_i N(i) \cdot C(Zi,X) \qquad (9)$$

Dabei ist N(i) die Zahl der Atome eines chemischen Elements in dem betreffenden Bildelement und C(Zi,X) die Streufunktion für dieses Element. Daraus ergibt sich:

$$Cm(x) \sim \sum_i ai \, C(Zi,X); \quad ai = N(i) / \sum N(i) \qquad (10)$$

ai ist dabei der Anteil der in einem Bildelement enthaltenen Atome eines chemischen Elements i bezogen auf die Gesamtzahl der in dem Bildelement enthaltenen Atome und Zi die Ordnungszahl Z des Elementes i.

Auf ähnliche Weise läßt sich schreiben:

$$Rm(X) \sim \sum_i ai \, R(Zi,X) \qquad (11)$$

R(Zi,X) ist dabei die Streufunktion des chemischen Elements mit der Ordnungszahl Zi für Rayleigh-Streustrahlung. Die einzelnen Werte dieser Funktion entsprechen dem Quadrat des atomaren Formfaktors, der unter dem Symbol F(q,Z) ebenfalls in den Standardtabellen von Hubbell et al enthalten ist.

Nach den Gleichungen (10) und (11): ist also der differentielle Streukoeffizient (für Compton- bzw.

Rayleigh-Strahlung) der mit Anteilen ai gewichteten Summe der Streufunktionen für Compton- bzw. Rayleigh-Streustrahlung proportional. Dabei sind die differentiellen Streukoeffizienten Cm(X) und Rm(X) (durch Messung und Iterationsverfahren) bekannt und die Streufunktionen C(Zi,X) und R(Zi,X) ebenfalls. Es besteht also lediglich die Aufgabe, die (unbekannten) Anteile ai, mit denen die Werte der Streufunktion gewichtet werden, so zu bestimmen, daß die gewichteten Summen als Funktion des Impulsübertrages den gleichen Verlauf haben wie die zuvor bestimmten differentiellen Streukoeffizienten. Diese Aufgabe ist grundsätzlich lösbar, wenn die differentiellen Streuquerschnitte (und die Streufunktionen) für mindestens so viele verschiedene Werte des Impulsübertrages bekannt sind, wie in dem Untersuchungsbereich verschiedene chemische Elemente vorhanden sind. Bei der Untersuchung des menschlichen Körpers sind dies im wesentlichen nur die zuvor schon erwähnten sechs chemischen Elemente, so daß die genannten Werte für mindestens sechs verschiedene Impulsüberträge bekannt sein müssen.

Aus der mathematischen Literatur (z.B. Journal of the Institute of Mathematics, Vol. 9, pp. 91-108, 1972) sind numerische (sogenannte Fitting-) Verfahren bekannt, mit denen die Anteile ai nach der Methode der kleinsten Fehlerquadrate so bestimmt werden können, daß gemäß den Gleichungen (10) und (11) der Verlauf der gewichteten Summen möglichst genau dem Verlauf der differentiellen Streukoeffizienten proportional ist. Die für die verschiedenen chemischen Elemente ermittelten Werte ai sind dem Anteil des betreffenden chemischen Elementes - ausgedrückt in Atomprozent - an der Materie in dem betreffenden Bildelement proportional.

Grundsätzlich wäre es möglich, allein durch Messung der Compton-Streustrahlung oder durch Messung der Rayleigh-Streustrahlung die Werte ai nach Gleichung(10) oder Gleichung (11) zu bestimmen. Aufgrund unvermeidlicher Meßfehler ergeben sich jedoch dadurch Ungenauigkeiten, die durch Messung beider Streustrahlenanteile und durch die Erfüllung der Gleichungen (10) und (11) wesentlich verringert werden können.

Es ist grundsätzlich möglich, die Bestimmung der Anteile der verschiedenen chemischen Elemente für alle Bildelemente der Schicht 4 durchzuführen. In diesem Fall ist es möglich, die räumliche Konzentration der chemischen Elemente innerhalb der Schicht zu ermitteln. Diese könnte dann in dem Speicher 17 gespeichert und bei Bedarf auf der Wiedergabeeinheit 15 wiedergegeben werden.

**Patentansprüche**

1. Verfahren zur Bestimmung der räumlichen Struktur in einer Schicht eines Untersuchungsbereiches, bei dem ein Untersuchungsbereich auf einer Vielzahl von Strahlenpfaden und aus einer Vielzahl von Richtungen von einem Primärstrahl durchsetzt wird und die aus dem Untersuchungsbereich unter verschiedenen Winkeln austretende Strahlung durch eine Detektoranordnung in verschiedenen Positionen außerhalb des Untersuchungsbereiches erfaßt wird, wonach aus den dabei gewonnenen Meßwerten für jedes Bildelement der Schicht der differentielle Streukoeffizient für verschiedene Impulsüberträge bestimmt wird,
dadurch gekennzeichnet, daß die Compton- und die Rayleigh-Streustrahlung an den verschiedenen Punkten getrennt gemessen werden, daß aus den Meßwerten (Mj(r,a)) für die Bildelemente der Schicht die differentiellen Streukoeffizienten für Compton- und Rayleigh-Streustrahlung getrennt bestimmt werden und daß für die einzelnen Bildelemente der Anteil (ai) der verschiedenen chemischen Elemente so bestimmt wird, daß die Überlagerung der mit diesen Anteilen gewichteten differentiellen Streuquerschnitte (ds/do) dieser Elemente als Funktion des Impulsübertrages zumindest annähernd proportional zu den ermittelten differentiellen Streukoeffizienten für Compton-und Rayleigh-Streuung als Funktion des Impulsübertrages (X) verläuft.

2. Verfahren nach Anspruch 1,
dadurch gekennzeichnet, daß die Energie der Gamma- bzw. Röntgenstrahlung im Primärstrahl so gewählt und die Detektoranordnung derart angeordnet ist, daß die Streustrahlung für Impulsüberträge X im Bereich $0{,}5 \leq XLo/h \leq 6$ bestimmt wird, wobei h das Planck'sche Wirkungsquantum ist und Lo = $10^{-10}$m.

3. Verfahren nach einem der vorhergehenden Ansprüche,
dadurch gekennzeichnet, daß für jede Richtung(a) und jeden Strahlenpfad (r) eine erste Messung der Streustrahlung durchgeführt wird, bei der die Streustrahlung direkt auf die Detektoranordnung (D1...Dn) trifft, und eine zweite Messung, bei der zwischen dem Untersuchungsbereich (4) und der Detektoranordnung ein Filter (9) eingesetzt wird, dessen Absorptionsbandkante bei einer Wellenlänge liegt, die kürzer ist als die Wellenlänge der erzeugten Compton-Streustrahlung und länger als die Wellenlänge der Rayleigh-Streustrahlung.

4. Anordnung zur Durchführung des Verfahrens nach Anspruch 1 mit einer Strahlenquelle (1) zur Erzeugung von Gamma- oder Röntgenstrahlung, einer Ausblendvorrichtung (2) zur Erzeugung eines Primärstrahls (3) mit geringem Querschnitt, der einen Untersuchungsbereich (4) durchsetzt, eine Detektoranordnung (Do; D1...Dn) zur Erfassung des Primärstrahls jenseits des Untersuchungsbereichs und der in dem vom Primärstrahl durchsetzten Bereich erzeugten Streustrahlung, Antriebsmitteln (7) zur Erzeugung von translatorischen und rotatorischen Bewegungen zwischen dem Untersuchungsbereich einerseits und der Strahlenquelle und der Detektoranordnung andererseits und mit einer Recheneinrichtung (12) zur Bestimmung der differentiellen Streukoeffizienten in den Bildelementen der vom Primärstrahl durchsetzten Schicht des Untersuchungsbereichs,
dadurch gekennzeichnet, daß die Detektoranordnung (D1...Dn) so ausgebildet ist, daß bei der Detektion von Gamma- oder Röntgenquanten Impulse mit von der Quantenenergie abhängige Amplitude erzeugt werden, daß die Weiterverarbeitung (in E1...En) der Impulse in Abhängigkeit von ihrer Amplitude derart erfolgt, daß die Compton-und Rayleigh-Streustrahlung getrennt erfaßbar sind, daß eine Speicheranordnung (13) vorgesehen ist, in der von dem im Untersuchungsbereich vorkommenden chemischen Elementen die Streuquerschnitte (C(Zi,X); R(Zi,X)) für Compton- und Rayleigh-Streustrahlung für verschiedene Werte des Impulsübertrages gespeichert sind, und daß die Recheneinheit so programmiert ist, daß aus den Meßwerten (Mj(r,a)) und den in der Speicheranordnung (13) enthaltenen Werten der Anteil der in den einzelnen Bildelementen enthaltenen chemischen Elemente bestimmt wird.

5. Anordnung nach Anspruch 4,
dadurch gekennzeichnet, daß als Strahlenquelle ein Röntgenstrahler (1) mit einer Tantalanode dient und daß in dessen Strahlengang ein Filter (8) zum Unterdrücken der kürzerwelligen Strahlung vorgesehen ist.

6. Anordnung nach Anspruch 4,
dadurch gekennzeichnet, daß als Strahlenquelle eine Tantalfolie (1a) dient, deren Fluoreszenzstrahlung von dem Röntgenstrahler (1) angeregt wird und in deren Strahlengang sich das Filter (8) zum Unterdrücken der kürzerwelligen Strahlung befindet.

7. Anordnung nach Anspruch 5 oder 6,
dadurch gekennzeichnet, daß das Filter (8) aus Thulium besteht.

8. Anordnung nach einem der Ansprüche 5 bis 7,
dadurch gekennzeichnet, daß ein Erbiumfilter (9) vorgesehen ist, das zwischen den Untersuchungsbereich (4) und die Detektoranordnung (6) einschiebbar ist.

9. Anordnung nach Anspruch 4,
dadurch gekennzeichnet, daß als Strahlenquelle das Radionuklid Americium 241 dient, und daß zwischen den Untersuchungsbereich und die Detektoranordnung (6) ein Filter aus Thulium einschiebbar ist.

**Claims**

1. A method of determining the spatial structure of a layer of an examination zone which is traversed by a primary beam along a plurality of beam paths and from a plurality of directions, the radiation emerging from the examination zone at different angles being detected by a detector device in different positions outside the examination zone, after which the differential scatter coefficient is determined for different momentum transfers for each pixel of the layer from the measurement values thus obtained,
characterized in that the Compton scattered radiation and the Rayleigh scattered radiation are separately measured at the various points, the differential scatter coefficients for Compton scattered radiation and Rayleigh scattered radiation being determined separately from the measurement values (Mj(r,a)) for the pixels of the layer, the share (ai) of the various chemical elements being determined for the individual pixels so that the superposition of the differential scatter cross-sections (ds/do) of these elements, weighted by these shares, as a function of the momentum transfer is at least approximately proportional to the differential scatter coefficients determined for Compton scattering and Rayleigh scattering as a function of the momentum transfer (X).

**2.** A method as claimed in Claim 1,
characterized in that the energy of the gamma rays or X-rays in the primary beam and the arrangement of the detector device are chosen so that the scattered radiation is determined for momentum transfers X in the range $0.5 \leq XLo/h \leq 6$, where h is Planck's action quantum and $Lo = 10^{-10}$ m.

**3.** A method as claimed in any one of the preceding Claims,
characterized in that for each direction (a) and each beam path (r) there is performed a first measurement of the scattered radiation during which the scattered radiation is incident directly on the detector device (D1...Dn), followed by a second measurement during which a filter (9) is inserted between the examination zone (4) and the detector device, the absorption band edge of said filter being situated at a wavelength which is shorter than the wavelength of the Compton scattered radiation produced and longer than that of the Rayleigh scattered radiation.

**4.** A device for performing the method claimed in Claim 1, comprising a radiation source (1) for generating gamma rays or X-rays, a diaphragm device (2) for forming a primary beam (3) having a narrow cross-section which traverses an examination zone (4), a detector device (Do; D1...Dn) for detecting the primary beam on the other side of the examination zone as well as the scattered radiation produced in the zone traversed by the primary beam, drive means (7) for realizing translatory and rotary motions between the examination zone on the one side and the radiation source and the detector device on the other side, and an arithmetic device (12) for determining the differential scatter coefficient in the pixels of the layer of the examination zone traversed by the primary beam,
characterized in that the detector device (D1...Dn) is constructed so that, upon detection of gamma quanta or X-ray quanta, pulses are generated which have an amplitude which depends on the quantum energy, the pulses being processed (in E1....En) in dependence of their amplitude so that the Compton scattered radiation and the Rayleigh scattered radiation can be separately measured, there being provided a storage device (13) in which the scatter cross-sections (C(Zi,X); R(Zi,X)) for Compton scattered radiation and Rayleigh scattered radiation are stored for different values of the momentum transfer for the chemical elements occurring in the examination zone, the arithmetic device being programmed so that the share of the chemical elements contained in the individual pixels is determined from the measurement values (Mj(r,a)) and the values stored in the storage device (13).

**5.** A device as claimed in Claim 4,
characterized in that the radiation source used is formed by an X-ray source (1) having a tantalum anode, a filter (8) for suppressing the short-wave radiation being arranged in the beam path thereof.

**6.** A device as claimed in Claim 4,
characterized in that for the radiation source use is made of a tantalum foil (1a) whose fluorescent radiation is excited by the X-ray source (1), the filter (8) for suppressing the short-wave radiation being arranged in the beam path thereof.

**7.** A device as claimed in Claim 5 or 6,
characterized in that the filter (8) is made of thulium.

**8.** A device as claimed in any one of the Claims 5 to 7,
characterized in that there is provided an erbium filter (9) which can be inserted between the examination zone (14) and the detector device (6).

**9.** A device as claimed in Claim 4,
characterized in that for the radiation source use is made of the radio-nuclide americium 241, and that a filter which is made of thulium can be inserted between the examination zone and the detector device (6).

**Revendications**

**1.** Procédé pour la détermination de la structure spatiale dans une couche d'un domaine d'examen, suivant lequel un domaine d'examen est traversé par un rayon primaire suivant une pluralité de trajets de rayonnement et dans une pluralité de directions et le rayonnement émanant du domaine d'examen sous différents angles est capté par un agencement de détecteurs en diverses positions à l'extérieur du domaine d'examen, après quoi le coefficient de diffusion différentielle pour divers transferts d'impulsions est déterminé à partir des valeurs de mesure ainsi obtenues pour chaque élément d'image de la couche, caractérisé en ce que le rayonnement de diffusion de Compton et celui de Rayleigh sont séparément mesurés aux différents points, que les coefficients de diffusion différentielle pour le rayonnement de diffusion de Compton et celui de Rayleigh sont déterminés séparément à partir des valeurs de mesure [Mj(r,a)] pour les éléments d'image de la couche et que la quantité (ai) des divers éléments chimiques pour les différents éléments d'image est déterminée de telle sorte que la superposition des sections de diffusion (ds/d0) différentielle de ces éléments pondérés par ces quantités en fonction du transfert d'impulsion évolue à peu près au moins proportionnellement au coefficient de diffusion différentielle déterminé pour la diffusion de Compton et de Rayleigh en fonction du transfert d'impulsion (X).

2. Procédé suivant la revendication 1, caractérisé en ce que l'énergie du rayonnement gamma ou X dans le rayon primaire est choisie telle et l'agencement de détecteurs est disposé de telle façon que le rayonnement diffusé soit déterminé pour des transferts d'impulsions X dans le domaine $0,5 \leq XLO \leq h \leq 6$, où h est le quantum d'action de Planck et $LO = 10^{-10}$ m.

3. Procédé suivant l'une quelconque des revendications précédentes, caractérisé en ce que, pour chaque direction (a) et chaque trajet de rayonnement (r), sont effectuées une première mesure du rayonnement de diffusion pour laquelle le rayonnement de diffusion frappe directement l'agencement de détecteurs (D1, ..., Dn) et une seconde mesure pour laquelle un filtre (9), dont le flanc de la bande d'absorption se trouve à une longueur d'onde qui est plus courte que la longueur d'onde du rayonnement de diffusion Compton produit et plus longue que la longueur d'onde du rayonnement de diffusion de Rayleigh, est inséré entre le domaine à examiner (4) et l'agencement de détecteurs.

4. Dispositif pour l'exécution du procédé suivant la revendication 1, comprenant une source de rayonnement (1) pour la production du rayonnement gamma ou X, un dispositif collimateur (2) pour la production d'un rayon primaire (3), de petite section, qui traverse le domaine d'examen, un agencement de détecteurs (D0, D1, ..., Dn) pour capter le rayon primaire de l'autre côté du domaine d'examen et le rayonnement diffusé produit dans le domaine traversé par le rayon primaire, des moyens d'entraînement (7) pour produire des mouvements de translation et de rotation entre le domaine d'examen, d'une part, et la source de rayonnement et l'agencement de détecteurs, d'autre part, de même qu'un dispositif de calcul (12) pour la détermination des coefficients de diffusion différentielle dans les éléments d'image de la couche du domaine d'examen traversée par le rayon primaire, caractérisé en ce que l'agencement de détecteurs (D1, ..., Dn) est construit de façon que, lors de la détection de quanta de rayons gamma ou de rayons X, des impulsions d'une amplitude dépendant de l'énergie des quanta soient produites, que la conversion (dans E1, ..., En) des impulsions en fonction de leur amplitude est effectuée de façon que le rayonnement diffusé de Compton et celui de Rayleigh puissent être captés séparément, qu'il est prévu un dispositif à mémoire (13) dans lequel sont stockées les sections de diffusion [C(Zi,X); R(Zi,X)] pour le rayonnement diffusé de Compton et celui de Rayleigh des éléments chimiques présents dans le domaine d'examen pour différentes valeurs du transfert d'impulsion et que l'unité de calcul est programmée de façon que la quantité des éléments chimiques contenus dans les éléments d'image distincts soit déterminée à partir des valeurs de mesure [Mj(r,a)] et des valeurs contenues dans le dispositif à mémoire (13).

5. Dispositif suivant la revendication 4, caractérisé en ce qu'un générateur de rayons X (1) comprenant une anode en tantale sert de source de rayonnement et qu'un filtre (8) pour supprimer le rayonnement de plus courte longueur d'onde est prévu dans son trajet de rayonnement.

6. Dispositif suivant la revendication 4, caractérisé en ce qu'une feuille de tantale (1a) sert de source de rayonnement dont le rayonnement de fluorescence est excité par générateur de rayons X (1) et dans le trajet du rayonnement de laquelle se trouve le filtre (8) destiné à supprimer le rayonnement de plus courte longueur d'onde.

7. Dispositif suivant la revendication 5 ou 6, caractérisé en ce que le filtre (8) est en thulium.

8. Dispositif suivant l'une quelconque des revendications 5 à 7, caractérisé en ce qu'est prévu un filtre en erbium (9) qui peut être inséré entre le domaine d'examen (4) et l'agencement de détecteurs (6).

9. Dispositif suivant la revendication 4, caractérisé en ce que le radionucléide américium 241 sert de source de rayonnement et qu'un filtre en thulium peut être inséré entre le domaine d'examen et l'agencement de détecteurs (6).

FIG. 1a

FIG. 1b

FIG. 2a

FIG. 2b

FIG. 2c

FIG. 3

FIG. 4

FIG.5a

FIG.5b

FIG.5c